# FASCICULE DE BREVET EUROPEEN

(11) **EP 2 190 923 B1**
(45) Date de publication et mention de la délivrance du brevet: **17.07.2013**
(21) Numéro de dépôt: 08831360.6
(22) Date de dépôt: 26.08.2008
(51) Int. Cl.: C08L 53/00, C08L 67/04, C08F 293/00, D01F 6/92

(54) **COMPOSITION RENFERMANT UN HOMOPOLYMERE D'ACIDE LACTIQUE ET UN COPOLYMERE A BLOCS**
ZUSAMMENSETZUNG MIT EINEM MILCHSÄURE-HOMOPOLYMER UND EINEM BLOCKCOPOLYMER
COMPOSITION CONTAINING A LACTIC ACID HOMOPOLYMER AND A BLOCK COPOLYMER

(30) Priorité: 19.09.2007 FR 0706583
(43) Date de publication de la demande: 02.06.2010
(73) Titulaire: ARKEMA FRANCE, 92700 Colombes (FR)
(72) Inventeur: GERARD, Pierre, F-64230 Denguin (FR); NAVARRO, Christophe, F-64990 Lahonce (FR)
(86) Numéro de dépôt international: PCT/FR2008/051530
(87) Numéro de publication internationale: WO 2009/037412

(56) Documents cités:
- WO-A-03/033592
- WO-A-2007/060930
- WO-A-2007/084291
- JP-A- 2007 023 145
- JP-A- 2007 099 952
- US-A- 5 252 642

## Description

L'acide lactique est un précurseur dégradable, biocompatible (bio-assimilable) et bio-recyclable de polymères connus sous lés noms d'acide polylactique ou poly(acide lactique) ou pclylactide ou PLA. Il est issu de ressources renouvelables et est produit en utilisant des biotechnologies, généralement par fermentation du maïs. Du fait de sa rigidité, de sa transparence et de son hydrophobicité, le PLA trouve diverses applications industrielles, notamment dans le domaine biomédical, des fibres textiles ainsi que du packaging, où il constitue une alternative de choix au PET (polyéthylène téréphtalate), matériau impopulaire en raison de sa rémanence dans l'environnement et dont l'origine pétrolière rend l'utilisation future incertaine. Toutefois, même si la potentialité énorme du PLA en tant que matériau dégradable n'est plus à démontrer, son développement reste toutefois limité, essentiellement en raison de son coût élevé, et dépend donc de la mise au point de procédés industriels peu onéreux de polymérisation. L'élargissement de ses applications nécessite en outre l'amélioration de ses propriétés thermiques et mécaniques. Ainsi, son allongement à la rupture demeure insuffisant pour une utilisation dans le secteur de l'emballage.

Pour renforcer les matrices à base de PLA, on a classiquement recours à des modifiants chocs qui, en raison de leur taille (supérieure à 80 nm) et de leur indice optique, diffusent la lumière une fois introduits dans la matrice, ce qui affecte la transparence de cette dernière. Un renfort à base de poly(méthacrylate de méthyle) présenterait les mêmes inconvénients. En outre, la résistance thermique et la résistance aux chocs des matrices à base de PLA renforcées par du poly(méthacrylate de méthyle) nécessite souvent d'être améliorée, par exemple par incorporation dans celles-ci d'un modifiant choc du type méthacrylate de méthyle / butadiène / styrène tel que les modifiants chocs Clearstrength^{®} d'ARKEMA.

Une autre solution proposée dans le document WO 2007/084291 pour améliorer la flexibilité et l'allongement du PLA sans affecter sensiblement sa transparence a consisté à le mélanger soit à un copolymère acrylique greffé PLA, soit à un copolymère à blocs renfermant des blocs de PLA et des blocs d'un homopolymère (méth)acrylique, pour former des microdomaines de copolymère (méth)acrylique dispersés dans une matrice de PLA, ou l'inverse.

Il subsiste néanmoins le besoin de disposer d'un autre moyen permettant de renforcer les matrices à base de PLA sans affecter sensiblement leur transparence. Or, de telles matrices sont connues pour être difficilement compatibles avec d'autres polymères, dans la mesure où ceux-ci sont susceptibles d'être le siège de dégradations chimiques conduisant à la coloration de la matrice et à une perte de poids moléculaire. En outre, l'adhérence à l'interface des deux matériaux n'est pas toujours satisfaisante, ce qui affecte les propriétés physiques de la matrice renforcée et peut en particulier la rendre cassante.

La Demanderesse a eu le mérite de mettre au point des mélanges de PLA avec des copolymères à blocs permettant de pallier les déficiences de l'art antérieur.

Ces copolymères permettent d'obtenir une organisation de la matière à l'échelle du nanomètre, non pas par mélange mécanique mais par auto-organisation des molécules gouvernée par la thermodynamique. Il en résulte un renforcement très significatif de la matrice à base de PLA sans affecter sensiblement ses autres propriétés et notamment sa transparence et sa rigidité.

Il est déjà connu du document US 2004/0147674 que la flexibilité et la résistance aux chocs d'une résine thermoplastique telle que la PLA peuvent être améliorées par combinaison avec un copolymère acrylique à blocs, linéaire ou en étoile, tel qu'un copolymère tribloc méthacrylate de méthyle / acrylate de n-butyle / méthacrylate de méthyle. Ce copolymère a un indice de polydispersité Ip = Mw/Mn (où Mw est sa masse moléculaire moyenne en poids et Mn est sa masse moléculaire moyenne en nombre) d'au plus 1,8 et de préférence d'au plus 1,5. Il peut être préparé par polymérisation anionique vivante, polymérisation radicalaire en utilisant un agent de transfert de chaîne ou polymérisation radicalaire vivante utilisant par exemple un nitroxyde. La polymérisation radicalaire par transfert d'atome, amorcée par un halogénure organique et catalysée par un complexe métallique, est toutefois préférée.

Dans le même ordre d'idées, il a été envisagé dans le document WO 2007/060930 de combiner le PLA avec des copolymères acryliques à blocs, notamment du type méthacrylate de méthyle / acrylate de butyle / méthacrylate de méthyle, dans un rapport en poids du PLA au copolymère allant de 97 :3 à 40 :60. Ces copolymères sont obtenus suivant un procédé de polymérisation anionique ou radicalaire par transfert d'atome, en présence d'un métal de transition et d'un composé halogéné utilisé comme amorceur. Ce procédé leur confère un indice de polydispersité compris entre 1 et 1,4. Cette approche est également décrite dans les documents JP 2007023145 et JP2007099952

Bien que les mélanges décrits dans le document WO 2007/060930 soient présentés comme ayant des propriétés améliorées de flexibilité, aptitude au moulage et au thermocollage, perméabilité à l'humidité et résistance aux chocs, à la flexion et à l'allongement, sans perte de transparence, ces propriétés ne sont obtenues que pour des combinaisons présentant un certain rapport de viscosités à l'état fondu des deux constituants du mélange. En particulier, le Tableau 2 de ce document montre que des compositions renfermant un rapport pondéral du PLA au copolymère de 30 :70 ne permettent pas d'obtenir les propriétés recherchées.

Or, il est apparu à la Demanderesse que des compositions renfermant un mélange de PLA et de copolymère acrylique à blocs obtenu selon un procédé différent de celui mis en oeuvre dans le document WO 2007/060930, et présentant par conséquent un indice de polydispersité d'au moins 1,5, présentaient de meilleures propriétés, et en particulier un indice de fluidité plus élevé facilitant leur mise en oeuvre, que les mélanges décrits dans ce document.

En outre, ces propriétés peuvent être atteintes sans perte significative de transparence, y compris à des taux de copolymère supérieurs à 65% en poids par rapport au poids total du mélange de copolymère et de PLA.

La présente invention a donc pour objet une composition renfermant au moins un homopolymère d'acide lactique et au moins un copolymère à blocs ayant un indice de polydispersité allant de 1,5 à 5 et comprenant :
au moins un bloc A miscible avec l'homopolymère et constitué de monomères renfermant au moins un méthacrylate de formule CH₂=C(CH₃)-COOR₁ où R₁ est un groupe alkyle linéaire ou ramifié en C₁-C₃, un groupe ramifié en C₄, un groupe cycloalkyle en C₃-C₈, un groupe aryle en C₆-C₂₀, un groupe arylalkyle en C₇-C₃₀ renfermant un groupe alkyle en C₁-C₄, un groupe hétérocyclique ou un groupe hétérocyclylalkyle renfermant un groupe alkyle en C₁-C₄, ces groupes étant éventuellement substitués par un ou plusieurs groupes identiques ou différents choisis parmi les groupes hydroxyle et halogène, caractérisée en ce que le bloc A comprend, en plus du méthacrylate, au moins un monomère dialkylacrylamide dont les groupes alkyle, linéaires ou ramifiés, renferment indépendamment de 1 à 10 atomes de carbone, tel que n,n-diméthylacrylamide, et
- au moins un bloc B non miscible avec l'homopolymère et constitué de monomères renfermant :
   au moins un acrylate d'alkyle de formule CH₂=CH-COOR₂ où R₂ est un groupe alkyle linéaire ou ramifié en C₁-C₁₂ éventuellement substitué par un ou plusieurs groupes identiques ou différents choisis parmi les groupes hydroxyle et halogène, et/ou
   au moins un méthacrylate de formule CH₂=C(CH₃)-COOR₃ où R₃ est un groupe alkyle linéaire en C₄-C₁₂ ou un groupe alkyle ramifié en C₅-C₁₂.

Par "copolymère à blocs", on entend selon l'invention un copolymère à blocs linéaire ou en étoile ou, par extension, un copolymère à gradient. Ce copolymère est considéré en tant qu'entité individuelle, sous forme auto-supportee, et non en tant que structure greffée sur un autre (co)polymère telle que l'écorce d'un système coeur-écorce classiquement utilisé comme agent anti-chocs. Par ailleurs, il est entendu que le copolymère selon l'invention ne porte pas de greffons PLA.

Le copolymère selon l'invention a un indice de polydispersité Ip = Mw/Mn (où Mw est sa masse moléculaire moyenne en poids et Mn sa masse moléculaire moyenne en nombre) allant de 1,5 à 5 et de préférence de 2 à 3.

Le bloc A du copolymère à blocs selon l'invention a de préférence une température de transition vitreuse supérieure à 0°C. Il peut par exemple comprendre au moins un monomère choisi parmi : le méthacrylate de méthyle, le méthacrylate d'éthyle, le méthacrylate de propyle ou d'isopropyle, le méthacrylate d'isobutyle, le méthacrylate de tert-butyle ou leurs mélanges.

Selon une forme d'exécution préférée de l'invention, le bloc A comprend des monomères méthacrylate de méthyle.

En outre, le bloc A comprend, en plus du méthacrylate, au moins un monomère dialkylacrylamide dont les groupes alkyle, linéaires ou ramifiés renferment indépendamment de 1 à 10 atomes de carbone, tel que n,n-diméthylacrylamide.

De son côte, le bloc B a de préférence une température de transition vitreuse inférieure à 0°C et plus préférentiellement d'au plus -10°C.

Le bloc B peut ainsi comprendre au moins un monomère choisi parmi l'acrylate de n-butyle, l'acrylate de 2-éthylhexyle, l'acrylate d'hydroxyéthyle, le méthacrylate de 2-éthylhexyle, l'acrylate de n-octyle et leurs mélanges.

Selon une forme d'exécution préférée de l'invention, le bloc B est uniquement constitué de monomères acrylate de n-butyle, acrylate de 2-éthylhexyle, acrylate d'hydroxyéthyle, méthacrylate de 2-éthylhexyle, acrylate de n-octyle ou de leurs mélanges.

Un exemple particulièrement préféré de copolymère à blocs selon l'invention est un copolymère à blocs méthacrylate de méthyle / acrylate de n-butyle / méthacrylate de méthyle.

Le copolymère mis en oeuvre selon l'invention peut être obtenu par polymérisation radicalaire contrôlée en présence d'un nitroxyde, comme décrit notamment dans la demande WO 03/062293.

Un tel procédé comprend les étapes successives de :
1- préparation d'une monoalcoxyamine à partir d'un nitroxyde, tel que décrit notamment dans la demande WO 2004/014926,
2- préparation d'une polyalcoxyamine, notamment d'une dialcoxyamine, à partir de la monoalcoxyamine obtenue à l'étape 1, par exemple par réaction avec un α,ω-diol à extremités estérifiées par un composé carboxyvinylique tel que l'acide (méth)acrylique,
3- preparation du bloc B par polymérisation des monomères correspondants en présence de la polyalcoxyamine, obtenue à l'étape 2, jusqu'à un taux de conversion de préférence inférieur à 90%, plus préférentiellement inférieur à 80%, par exemple de 70%,
4- mélange du bloc B ainsi obtenu avec les monomères destinés à former le bloc A,
5- préparation du bloc A en utilisant le bloc B comme amorceur de polymérisation, et
6- élimination des monomères résiduels éventuellement présents dans le copolymère ainsi obtenu.

Les nitroxydes utilisés dans ce procédé répondent par exemple à la formule (III) ci-dessous : 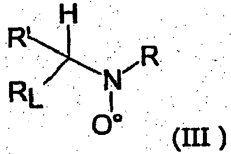 dans laquelle :
R et R' identiques ou différents, éventuellement reliés de manière à former un cycle, désignent des groupes alkyle en C₁-C₄₀ éventuellement substitués par un ou plusieurs groupes hydroxyle, alcoxyle ou amino, R et R' désignant de préférence indépendamment un groupe alkyle en C₁-C₁₀, plus préférentiellement en C₁-C₆, non substitué, tel qu'un groupe tert-butyle, et
R₁ désigne un groupe monovalent de masse molaire supérieure à 16 g/mol tel qu'un groupe dialkyl phosphonate et en particulier un groupe diéthyl phosphonate.

En outre, le copolymère à blocs utilisable selon l'invention peut être obtenu dans le commerce auprès de la société ARKEMA sous la dénomination commerciale Nanostrength^{®}.

De son côté, l'homopolymère d'acide lactique est notamment disponible dans le commerce sous la référence 2002 D auprès dé la société NATURE WORKS. Il peut notamment avoir une masse moléculaire moyenne en nombre Mn comprise entre 20.000 et 100.000 g/mol et un indice de polydispersité allant de 1 à 2.

Le mélange de l'homopolymère d'acide lactique et du copolymère décrit précédemment peut être effectué par tout moyen et notamment par co-extrusion, polymérisation de l'homopolymère en présence du copolymère à blocs préalablement formé ou mélangeage à l'aide d'une chambre de mélange interne ou d'un appareil de malaxage de type mono-vis ou bi-vis. On préfère que le mélange de l'homopolymère et du copolymère à blocs, avantageusement présents chacun sous forme de granulés, soit réalisé dans un co-malaxeur, par exemple de type BUSS, à une température de préférence voisine de 220°C.

Selon une forme d'exécution préférée de l'invention, le rapport en poids du copolymère à l'homopolymère d'acide lactique va de 30:70 à 80:20. Plus préférentiellement, le rapport en poids du copolymère à l'homopolymère d'acide lactique va de 50:50 à 70:30. En variante, le rapport en poids du copolymère à l'homopolymère d'acide lactique peut aller de 65:35 à 80:20.

La composition selon l'invention présente avantageusement une valeur de Haze inférieure à 5% et une transmission supérieure à 80%, telles que mesurées selon la norme ASTM D 1003.

La présente invention a également pour objet l'utilisation de la composition décrite précédemment pour la fabrication d'articles médicaux, de fibres textiles, de plateaux thermoformés ou d'emballages, en particulier de films ou de bouteilles. L'utilisation de cette composition pour la fabrication d'articles moulés par injection, transparents et à haute ténacité, peut également être envisagée.

Elle concerne enfin l'utilisation d'un copolymère tel que défini pour améliorer la transparence, la fluidité, la déformation à la rupture et/ou la ténacité d'une matrice d'homopolymère d'acide lactique.

### EXEMPLES

### Exemple 1 : Préparation d'une composition selon l'invention

### 1A - Préparation du copolymère à blocs

### Préparation de l'acide 2-méthyl-2[N-tertiobutyl-N-(diéthoxyphosphoryl-2,2-diméthylpropyl)aminoxy]propionique

Dans un réacteur en verre de 2 l purgé à l'azote, on introduit 500 ml de toluène dégazé, 35, 9 g de CuBr (250 mmol), 15,9 g de cuivre en poudre (250 mmol), 86,7 g de N,N,N',N',N"-pentaméthyl-diéthylènetriamine ou PMDETA (500 mmol) puis, sous agitation et à température ambiante (20°C), on introduit un mélange contenant 500 ml de toluène dégazé, 42,1 g d'acide 2-bromo-2-méthylpropionique (250 mmol) et 78,9 g de SG1 à 84% (225 mol), ayant pour formule :

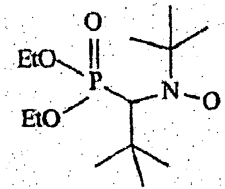

On laisse, réagir pendant 90 min à température ambiante et sous agitation, puis on filtre le milieu réactionnel. Le filtrat toluénique est lavé deux fois avec 1,5 l d'une solution aqueuse saturée en NH₄Cl.

On obtient un solide jaunâtre qui est lavé au pentane pour donner 51 g d'acide 2-méthyl-2[N-tertiobutyl-N-(diéthoxyphosphoryl-2,2-diméthylpropyl)aminoxy]propionique (rendement : 60%). La structure est notamment confirmée par spectrométrie de masse et RMN ¹H.

### Préparation d'une dialcoxyamine

On introduit dans un ballon de 100 ml purgé à l'azote 2 g de la monoalcoxyamine obtenue comme décrit ci-dessus ; 0,52 g de 1,4-butanediol diacrylate de pureté > 98% (1 équ.) et 6,7 ml d'éthanol. On chauffe à reflux pendant 20h à 78°C, puis l'éthanol est évaporé sous vide. On obtient 2,5 g d'une huile jaune très visqueuse.

L'analyse RMN ³¹P montre la disparition totale de la monoalcoxyamine (27,4 ppm) et l'apparition de la dialcoxyamine (multiplet à 24,7-25,1 ppm). L'analyse par spectrométrie de masse de type électrospray révèle une masse de 961 (M+).

### Préparation du copolymère à blocs

La synthèse se fait en 2 étapes :

### ➢ 1^{ère} étape : Préparation en masse d'un polymère poly(acrylate de n-butyle) vivant

Dans un réacteur de polymérisation de 1 l équipé d'un moteur d'agitation à vitesse variable, d'entrées pour l'introduction des réactifs, de piquages pour l'introduction de gaz inertes permettant de chasser l'oxygène, de sondes de mesure de la température, d'un système de condensation de vapeurs avec reflux, d'une double enveloppe permettant de chauffer/refroidir le contenu du réacteur grâce à la circulation dans celle-ci d'un fluide caloporteur, on introduit 146 g d'acrylate de butyle et 3,93 g de dialcoxyamine obtenue comme décrit precédemment. Après plusieurs dégazages à l'azote, le milieu réactionnel est porté à 115°C et cette température est maintenue par régulation thermique pendant plusieurs heures.

Des prélèvements sont réalisés tout au long de la réaction afin de :
- déterminer la cinétique de polymérisation par gravimétrie (mesure d'extrait sec),
- suivre l'évolution de la masse moléculaire en nombre (Mn) en fonction de la conversion du monomère en polymère.

Lorsque la conversion de 70 % est atteinte, le milieu réactionnel est refroidi à 60°C et l'acrylate de butyle résiduel est éliminé par évaporation sous vide.

Les masses moléculaires du poly(acrylate de n-butyle) en équivalent polystyrène sont de 49 090 g/mole pour Mp (masse moléculaire au sommet du pic), 35 090 g/mole pour Mn (masse moléculaire moyenne en nombre) et 49 830 g/mole pour Mw (masse moléculaire moyenne en poids).

### ➢ 2^{éme} étape : Réamorçage du poly(acrylate de n-butyle) vivant par le méthacrylate de méthyle

A 60°C, 142 g de méthacrylate de méthyle et 305,6 g de toluène préalablement dégazés sont additionnés au poly(acrylate de n-butyle) préparé précédemment. Le milieu réactionnel est alors chauffé à 105°C pendant une heure, puis à 120°C pendant une heure supplémentaire. La conversion atteinte est de l'ordre de 50%. Après retour à température ambiante, la solution de copolymère (méthacrylate de méthyle -b- acrylate de n-butyle -b-méthacrylate de méthyle) à 50% en poids d'acrylate de n-butyle est soutirée du réacteur et les monomères et solvants résiduels sont éliminés par évaporation sous vide.

Les masses moléculaires du copolymère en équivalent polystyrène sont de 102 730 g/mole pour Mp (masse moléculaire au sommet du pic), 63 800 g/mole pour Mn (masse moléculaire moyenne en nombre) et 131 130 g/mole pour Mw (masse moléculaire moyenne en poids). L'indice de polydispersité est de 2,05.

### 1B - Mélange du copolymère à blocs avec l'homopolymère d'acide lactique

Le copolymère préparé comme décrit à l'Exemple 1A a été mélangé à de l'acide de polylactique (PLA) (2002 D de NATURE WORKS) dans une proportion pondérale copolymère : PLA de 60:40, dans un co-malaxeur BUSS à 220°C. Le mélange a été injecté en boucle fermée sur une presse d'injection BILLION de 70 tonnes de force de fermeture. La température d'injection était de 210°C et la température du moule était de 20°C.

### Exemple 2 : Evaluation des propriétés mécaniques et optiques des compositions selon l'invention

### 2A - Protocoles des tests réalisés

La composition de l'Exemple 1B été soumise à différents tests effectués dans les conditions opératoires détaillées dans le Tableau 1 ci-dessous.

**Tableau 1**

| Tests réalisés sur les compositions PLA/copolymère à blocs | | |
|---|---|---|
| Paramètre testé (unité) | Norme ou appareillage | Conditions du test |
| Fluidité (melt index) ou MI (g/10 min) | 4M009 | Température = 230°C |
| | (CEAST) | Charge = 3,8 kg |
| | | Durée du pré-melt : 4 min en contact piston, puis 2 min sous charge |
| Module d'élasticité en flexion ou MEF (MPa) | ISO 178 | Eprouvettes injectées : 80,0 x 10,10 x 4,08 mm |
| | | Vitesse d'essai: 1 mm/min |
| | | Points module: 0,05 à 0,25% |
| | | Longueur portée: 64,64mm |
| | | Rayon appuis: 5mm |
| Tests de traction : contrainte au seuil d'écoulement σy ou RSE (MPa) et déformation à la rupture (%) | ISO 527-2 | Eprouvettes : Haltères type 1A |
| | | Lo = 50mm |
| | | Vitesse d'essai: 5 mm/min ==> allongement à 3% |
| | | Vitesse d'essai: 50 mm/min ==> allongement à 68% |
| | | Distance entre mors: 115mm |
| Propriétés optiques : Haze (%) et transmission totale ou TT (%) et netteté (%) | ASTM D 1003 | Pièces de 2 mm d'épaisseur Angle > 2.5° |
| | | Epaisseur disque : 2mm |
| Propriétés thermiques VICAT (°C) | ISO 306 | Eprouvettes : |
| | | Haltères |
| | | type 1A |
| | | Epaisseur : 4mm |
| | | Méthode B50 (50N - 50°C/heure) |
| Température de déflection thermique ou HDT (°C) | ISO 75-2 | Méthode Af ( à plat ) |
| | | Flèche : 0,33 mm |
| | | Eprouvettes injectées: 80x10, 10x4, 08 mm |
| | | Contrainte : 1,80MPa |
| | | Longueur portée : 64mm |
| | | Rampe : 120°C/heure |

### 2B - Résultats des tests

Les résultats des tests réalisés sur la composition de l'Exemple 1B sont donnés dans les Tableaux 2 et 3 ci-desscus.

**Tableau 2**

| Propriétés optiques de la composition selon l'invention | | | | | | | |
|---|---|---|---|---|---|---|---|
| | Mesure de couleur | | | | Haze | Netteté | TT |
| | L | a | b | YI | (%) | (%) | (%) |
| PLA 2002D | 95,53 | -0,22 | 2,4 | 4,5 | 9,8 | 99,6 | 91,3 |
| PLA + 60% copolymère | 92,35 | -0,57 | 9,81 | 18,25 | 4,3 | 99,5 | 83,4 |

**Tableau 3**

| Propriétés mécaniques de la composition selon l'invention | | |
|---|---|---|
| Paramètre testé | PLA 2002D | PLA + 60% copolymère |
| MI (g/10 min) | 62 | 91 |
| MEF (MPa) | 3724 | 1692 |
| RSE (MPa) | aucune | 29 |
| Déformation (%) | 3 | 68 |
| Charpy entaillé (KJ/m²) | 1,4 | 83 |
| Charpy non entaillé (KJ/m²) | 19 | NB (>180) |
| HDT (°C) | 55 | 57 |
| Vicat (°C) | 58 | 52 |

Sur le plan de ses propriétés optiques, la composition selon l'invention est un peu plus jaune que la référence PLA mais cela provient des conditions de compoundage puis d'injection qui n'ont pas été optimisées. En revanche, la valeur de Haze, qui traduit l'aspect trouble d'une composition dû à la diffusion de la lumière, est réduite, tout en gardant la netteté et sans trop perdre en transmission.

Du point de vue de ses propriétés mécaniques, la fluidité de la composition selon l'invention est très sensiblement améliorée. La rigidité (MEF) est réduite de moitié mais garde un niveau tout à fait acceptable pour les applications visées. L'augmentation de l'allongement à la rupture traduit le passage d'un comportement fragile à un comportement ductile. Surtout, la ténacité selon le test Charpy entaillé est considérablement augmentée et il est impossible de rompre l'échantillon dans le cas du test Charpy non entaillé (NB = Non Break) contrairement à la référence PLA qui se rompt avec une résilience de 19 kJ/m².

Les propriétés thermiques de la matrice PLA restent inchangées, avec ou sans renfort.

### Exemple 3 (comparatif) : Evaluation des propriétés mécaniques et optiques d'une matrice PLA renforcée PMMA

On a préparé, de manière analogue à l'Exemple 1, une matrice d'homopolymère d'acide lactique renforcée par du poly(méthacrylate de méthyle) commercialisé par la société ARKEMA sous la dénomination commerciale Altuglas^{®} V920.

**Tableau 4**

| Propriétés optiques d'un mélange PLA / PMMA | | | | | | | |
|---|---|---|---|---|---|---|---|
| | | | | | | | |

| | Mesure de couleur | | | | Haze | Netteté | TT |
|---|---|---|---|---|---|---|---|
| | L | a | b | YI | (%) | (%) | (%) |
| PLA 2002D | 95,53 | -0,22 | 2,4 | 4,5 | 9,8 | 99,6 | 91,3 |
| PLA + 60% PMMA | 95,78 | -0,12 | 1,83 | 3,45 | 5,4 | 99 | 91,4 |

**Tableau 5**

| Propriétés mécaniques d'un mélange PLA / PMMA | | |
|---|---|---|
| | | |

| Paramètre testé | PLA 2002D | PLA + 60% PMMA |
|---|---|---|
| MI (g/10 min) | 62 | 21 |
| MEF (MPa) | 3724 | 3765 |
| RSE (MPa) | aucune | aucune |
| Déformation (%) | 3 | 3 |
| Charpy entaillé (KJ/m²) | 1,4 | 1,8 |
| Charpy non entaillé (KJ/m²) | 19 | 18 |
| HDT (°C) | 55 | 71 |
| Vicat (°C) | 58 | 75 |

Comme il ressort de ces tableaux, la composition comparatrice est plus trouble que celle de l'Exemple 1B selon l'invention. En outre, sa fluidité (MI), sa déformation à la rupture et sa ténacité (Charpy) sont nettement inférieures à celles de la composition selon l'invention.

## Revendications

1. Composition renfermant au moins un homopolymère d'acide lactique et au moins un copolymère à blocs ayant un indice de polydispersité allant de 1,5 à 5 et comprenant :
- au moins un bloc A miscible avec l'homopolymère et constitué de monomères renfermant au moins un méthacrylate de formule CH₂=C(CH₃)-COOR₁ où R₁ est un groupe alkyle linéaire ou ramifié en C₁-C₃, un groupe ramifié en C₄, un groupe cycloalkyle en C₃-C₈, un groupe aryle en C₆-C₂₀, un groupe arylalkyle en C₇-C₃₀ renfermant un groupe alkyle en C₁-C₄, un groupe hétérocyclique ou un groupe hétérocyclylalkyle renfermant un groupe alkyle en C₁-C₄, ces groupes étant éventuellement substitués par un ou plusieurs groupes identiques ou différents choisis parmi les groupes hydroxyle et halogène, **caractérisée en ce que** le bloc A comprend, en plus du méthacrylate, au moins un monomère dialkylacrylamide dont les groupes alkyle, linéaires ou ramifiés, renferment indépendemment de 1 à 10 atomes de carbone, tel que n,n-diméthylacrylamide, et :
- au moins un bloc B non miscible avec l'homopolymère et constitué de monomères renfermant :
au moins un acrylate d'alkyle de formule CH₂=CH-COOR₂ où R₂ est un groupe alkyle linéaire ou ramifié en C₁-C₁₂ éventuellement substitué par un ou plusieurs groupes identiques ou différents choisis parmi les groupes hydroxyle et halogène, et/ou
au moins un méthacrylate de formule CH₂=C(CH₃)-COOR₃ où R₃ est un groupe alkyle linéaire en C₄-C₁₂ ou un groupe alkyle ramifié en C₅-C₁₂.

2. Composition selon la revendication 1, **caractérisée en ce que** le bloc A comprend des monomères méthacrylate de méthyle.

3. Composition selon la revendication 1 ou 2, **caractérisée en ce que** le bloc A a une température de transition vitreuse supérieure à 0°C.

4. Composition selon l'une quelconque des revendications 1 à 3, **caractérisée en ce que** le bloc B a une température de transition vitreuse inférieure à 0°C et de préférence d'au plus -10°C.

5. Composition selon l'une quelconque des revendications 1 à 4, **caractérisée en ce que** le bloc B comprend au moins un monomère choisi parmi l'acrylate de n-butyle, l'acrylate de 2-éthylhexyle, l'acrylate d'hydroxyéthyle, le méthacrylate de 2-éthylhexyle, l'acrylate de n-octyle et leurs mélanges.

6. Composition selon la revendication 5, **caractérisée en ce que** le bloc B est uniquement constitué de monomères acrylate de n-butyle, acrylate de 2-éthylhexyle, acrylate d'hydroxyéthyle, méthacrylate de 2-éthylhexyle, acrylate de n-octyle ou de leurs mélanges.

7. Composition selon l'une quelconque des revendications 1 à 6, **caractérisée en ce que** le copolymère est un copolymère à blocs méthacrylate de méthyle, n,n-diméthylacrylamide / acrylate de n-butyle / méthacrylate de méthyle, n,n-diméthylacrylamide.

8. Composition selon l'une quelconque des revendications 1 à 6, **caractérisée en ce que** le copolymère à blocs est un copolymère à blocs linéaire ou en étoile ou un copolymère à gradient.

9. Composition selon l'une quelconque des revendications 1 à 8, **caractérisée en ce que** le copolymère à blocs est susceptible d'être obtenu suivant un procédé comprenant les étapes successives de :
1- préparation d'une monoalcoxyamine à partir d'un nitroxyde,
2- préparation d'une polyalcoxyamine, notamment d'une dialcoxyamine, à partir de la monoalcoxyamine obtenue à l'étape 1, par exemple par réaction avec un α,ω-diol à extrémités estérifiées par un composé carboxyvinylique tel que l'acide (méth)acrylique,
3- préparation du bloc B par polymérisation des monomères correspondants en présence de la polyalcoxyamine obtenue à l'étape 2, jusqu'à un taux de conversion de préférence inférieur à 90%, plus préférentiellement inférieur à 80%, par exemple de 70%,
4- mélange du bloc B ainsi obtenu avec les monomères destinés à former le bloc A,
5- préparation du bloc A en utilisant le bloc B comme amorceur de polymérisation, et
6- élimination des monomères résiduels éventuellement présents dans le copolymère ainsi obtenu.

10. Composition selon l'une quelconque des revendications 1 à 9, **caractérisée en ce que** l'homopolymère d'acide lactique a une masse moléculaire moyenne en poids comprise entre 20.000 et 100.000 g/mol.

11. Composition selon l'une quelconque des revendications 1 à 10, **caractérisée en ce que** le rapport en poids du copolymère à l'homopolymère d'acide lactique va de 30:70 à 80:20.

12. Composition selon la revendication 11, **caractérisée en ce que** le rapport en poids du copolymère à l'homopolymère d'acide lactique va de 50:50 à 70:30.

13. Composition selon l'une quelconque des revendications 1 à 12, **caractérisée en ce qu'**elle présente une valeur de Haze inférieure à 5% et une transmission supérieure à 80%, telles que mesurées selon la norme ASTM D 1003.

14. Utilisation d'une composition selon l'une quelconque des revendications 1 à 13 pour la fabrication d'articles médicaux, de fibres textiles, de plateaux thermoformés ou d'emballages, en particulier de films ou de bouteilles.

15. Utilisation d'un copolymère tel que défini dans l'une quelconque des revendications 1 à 9 pour améliorer la transparence, la fluidité, la déformation à la rupture et/ou la ténacité d'une matrice d'homopolymère d'acide lactique

## Patentansprüche

1. Zusammensetzung, enthaltend mindestens ein Milchsäure-Homopolymer und mindestens ein Blockcopolymer, das einen Polydispersitätsindex im Bereich von 1,5 bis 5 aufweist und Folgendes umfasst:
- mindestens einen Block A, der mit dem Homopolymer mischbar ist und aus Monomeren besteht, die mindestens ein Methacrylat der Formel CH₂=C(CH₃)-COOR₁, wobei R₁ für eine lineare oder verzweigte C₁-C₃-Alkylgruppe, eine verzweigte C₄-Gruppe, eine C₃-C₈-Cycloalkylgruppe, eine C₆-C₂₀-Arylgruppe, eine C₇-C₃₀-Arylalkylgruppe mit einer C₁-C₄-Alkylgruppe, eine heterocyclische Gruppe oder eine Heterocyclylalyklgruppe mit einer C₁-C₄-Alkylgruppe steht, wobei diese Gruppen gegebenenfalls durch eine oder mehrere gleiche oder verschiedene Gruppen, die aus Hydroxyl- und Halogengruppen ausgewählt sind, substituiert sind, enthalten, **dadurch gekennzeichnet, dass** der Block A neben Methacrylat mindestens ein Dialkylacrylamid-Monomer, dessen lineare oder verzweigte Alkylgruppen unabhängig voneinander 1 bis 10 Kohlenstoffatome enthalten, wie N,N-Dimethylacrylamid, umfasst, und
- mindestens einen Block B, der mit dem Homopolymer nicht mischbar ist und aus Monomeren besteht, die
mindestens ein Alkylacrylat der Formel CH₂=CH-COOR₂, wobei R₂ für eine lineare oder verzweigte C₁-C₁₂-Alkylgruppe, die gegebenenfalls durch eine oder mehrere gleiche oder verschiedene Gruppen, die aus Hydroxyl- und Halogengruppen ausgewählt sind, substituiert ist, steht, und/oder mindestens ein Methacrylat der Formel CH₂=C(CH₃)-COOR₃, wobei R₃ für eine lineare C₄-C₁₂-Alkylgruppe oder eine verzweigte C₅-C₁₂-Alkylgruppe steht, enthalten.

2. Zusammensetzung nach Anspruch 1, **dadurch gekennzeichnet, dass** der Block A Methylmethacrylat-Monomere umfasst.

3. Zusammensetzung nach Anspruch 1 oder 2, **dadurch gekennzeichnet, dass** der Block A eine Glasübergangstemperatur von mehr als 0°C aufweist.

4. Zusammensetzung nach einem der Ansprüche 1 bis 3, **dadurch gekennzeichnet, dass** der Block B eine Glasübergangstemperatur von weniger als 0°C und vorzugsweise höchstens -10°C aufweist.

5. Zusammensetzung nach einem der Ansprüche 1 bis 4, **dadurch gekennzeichnet, dass** der Block B mindestens ein aus n-Butylacrylat, 2-Ethylhexylacrylat, Hydroxyethylacrylat, 2-Ethylhexylmethacrylat, n-Octylacrylat und Mischungen davon ausgewähltes Monomer umfasst.

6. Zusammensetzung nach Anspruch 5, **dadurch gekennzeichnet, dass** der Block B ausschließlich aus n-Butylacrylat-, 2-Ethylhexylacrylat-, Hydroxyethylacrylat-, 2-Ethylhexylmethacrylat-, n-Octylacrylat-Monomeren oder Mischungen davon besteht.

7. Zusammensetzung nach einem der Ansprüche 1 bis 6, **dadurch gekennzeichnet, dass** es sich bei dem Copolymer um ein Methylmethacrylat,N,N-Dimethylacrylamid/n-Butylacrylat/Methylmethacrylat,N,N-Dimethylacrylamid-Blockcopolymer handelt.

8. Zusammensetzung nach einem der Ansprüche 1 bis 6, **dadurch gekennzeichnet, dass** es sich bei dem Blockcopolymer um ein lineares oder sternförmiges Blockcopolymer oder ein Gradientencopolymer handelt.

9. Zusammensetzung nach einem der Ansprüche 1 bis 8, **dadurch gekennzeichnet, dass** das Blockcopolymer nach einem Verfahren erhältlich ist, das die folgenden aufeinanderfolgenden Schritte umfasst:
1- Herstellung eines Monoalkoxyamins aus einem Nitroxid,
2- Herstellung eines Polyalkoxyamins, insbesondere eines Dialkoxyamins, aus dem in Schritt 1 erhaltenen Monoalkoxyamin, beispielsweise durch Umsetzung mit einem α,ω-Diol mit durch eine Carboxyvinylverbindung wie (Meth)Acrylsäure veresterten Endgruppen,
3- Herstellung von Block B durch Polymerisation der entsprechenden Monomere in Gegenwart des in Schritt 2 erhaltenen Polyalkoxyamins bis zu einem Umsatzgrad von vorzugsweise weniger als 90%, weiter bevorzugt weniger als 80%, beispielsweise 70%,
4- Mischen des so erhaltenen Blocks B mit den Monomeren zur Bildung von Block A,
5- Herstellung von Block A unter Verwendung von Block B als Polymerisationsinitiator,
6- Entfernung der gegebenenfalls in dem so erhaltenen Copolymer vorliegenden Restmonomere.

10. Zusammensetzung nach einem der Ansprüche 1 bis 9, **dadurch gekennzeichnet, dass** das Milchsäure-Homopolymer ein gewichtsmittleres Molekulargewicht zwischen 20.000 und 100.000 g/mol aufweist.

11. Zusammensetzung nach einem der Ansprüche 1 bis 10, **dadurch gekennzeichnet, dass** das Gewichtsverhältnis von Copolymer zu Milchsäure-Homopolymer im Bereich von 30:70 bis 80:20 liegt.

12. Zusammensetzung nach Anspruch 11, **dadurch gekennzeichnet, dass** das Gewichtsverhältnis von Copolymer zu Milchsäure-Homopolymer im Bereich von 50:50 bis 70:30 liegt.

13. Zusammensetzung nach einem der Ansprüche 1 bis 12, **dadurch gekennzeichnet, dass** sie einen Haze-Wert von weniger als 5% und eine Durchlässigkeit von mehr als 80% gemäß ASTM-Norm D 1003 aufweist.

14. Verwendung einer Zusammensetzung nach einem der Ansprüche 1 bis 13 zur Herstellung von medizinischen Artikeln, Textilfasern, thermogeformten Platten oder Verpackungen, insbesondere Folien oder Flaschen.

15. Verwendung eines Copolymers gemäß einem der Ansprüche 1 bis 9 zur Verbesserung der Transparenz, der Fließfähigkeit, der Verformung bei Bruch und/oder der Festigkeit einer Milchsäure-Homopolymer-Matrix.

## Claims

1. Composition containing at least one lactic acid homopolymer and at least one block copolymer with a polydispersity index ranging from 1.5 to 5 and comprising:
- at least one block A that is miscible with the homopolymer and formed from monomers containing at least one methacrylate of formula CH₂=C(CH₃)-COOR₁ in which R₁ is a linear or branched C₁-C₃ alkyl group, a branched C₄ group, a C₃-C₈ cycloalkyl group, a C₆-C₂₀ aryl group, a C₇-C₃₀ arylalkyl group containing a C₁-C₄ alkyl group, a heterocyclic group or a heterocyclylalkyl group containing a C₁-C₄ alkyl group, these groups being optionally substituted with one or more identical or different groups chosen from halogen and hydroxyl groups, **characterized in that** block A comprises, in addition to methacrylate, at least one dialkylacrylamide monomer in which the linear or branched alkyl groups independently contain from 1 to 10 carbon atoms, such as N,N-dimethylacrylamide, and
- at least one block B that is immiscible with the homopolymer and formed from monomers containing:
at least one alkyl acrylate of formula CH₂=CH-COOR₂ in which R₂ is a linear or branched C₁-C₁₂ alkyl group optionally substituted with one or more identical or different groups chosen from halogen and hydroxyl groups, and/or
at least one methacrylate of formula CH₂=C(CH₃)-COOR₃ in which R₃ is a linear C₄-C₁₂ alkyl group or a branched C₅-C₁₂ alkyl group.

2. Composition according to Claim 1, **characterized in that** block A comprises methyl methacrylate monomers.

3. Composition according to Claim 1 or 2, **characterized in that** block A has a glass transition temperature of greater than 0°C.

4. Composition according to any one of Claims 1 to 3, **characterized in that** block B has a glass transition temperature of less than 0°C and preferably of not more than -10°C.

5. Composition according to any one of Claims 1 to 4, **characterized in that** block B comprises at least one monomer chosen from n-butyl acrylate, 2-ethylhexyl acrylate, hydroxyethyl acrylate, 2-ethylhexyl methacrylate and n-octyl acrylate, and mixtures thereof.

6. Composition according to Claim 5, **characterized in that** block B is formed solely from n-butyl acrylate, 2-ethylhexyl acrylate, hydroxyethyl acrylate, 2-ethylhexyl methacrylate and n-octyl acrylate monomers, or mixtures thereof.

7. Composition according to any one of Claims 1 to 6, **characterized in that** the copolymer is a methyl methacrylate, N,N-dimethylacrylamide/n-butyl acrylate/methyl methacrylate, N,N-dimethylacrylamide block copolymer.

8. Composition according to any one of Claims 1 to 6, **characterized in that** the block copolymer is a linear or star block copolymer or a gradient copolymer.

9. Composition according to any one of Claims 1 to 8, **characterized in that** the block copolymer may be obtained according to a process comprising the successive steps of:
1- preparing a monoalkoxyamine from a nitroxide,
2- preparing a polyalkoxyamine, especially a dialkoxyamine, from the monoalkoxyamine obtained in step 1, for example by reaction with an α,ω-diol containing end groups esterified with a carboxyvinyl compound such as (meth)acrylic acid,
3- preparing block B by polymerization of the corresponding monomers in the presence of the polyalkoxyamine obtained in step 2, up to a degree of conversion preferably of less than 90% and more preferentially of less than 80%, for example of 70%,
4- mixing the block B thus obtained with the monomers intended to form block A,
5- preparing block A using block B as polymerization initiator, and
6- removing the residual monomers that may be present in the copolymer thus obtained.

10. Composition according to any one of Claims 1 to 9, **characterized in that** the lactic acid homopolymer has a weight-average molecular mass of between 20 000 and 100 000 g/mol.

11. Composition according to any one of Claims 1 to 10, **characterized in that** the weight ratio of the copolymer to the lactic acid homopolymer ranges from 30/70 to 80/20.

12. Composition according to Claim 11, **characterized in that** the weight ratio of the copolymer to the lactic acid homopolymer ranges from 50/50 to 70/30.

13. Composition according to any one of Claims 1 to 12, **characterized in that** it has a Haze value of less than 5% and a transmittance of greater than 80%, as measured according to ASTM standard D 1003.

14. Use of a composition according to any one of Claims 1 to 13, for the manufacture of medical articles, textile fibers, thermoformed plates or packaging, in particular films or bottles.

15. Use of a copolymer as defined in any one of Claims 1 to 9, for improving the transparency, the fluidity, the deformation at break and/or the strength of a lactic acid homopolymer matrix.
